# FASCICULE DE BREVET EUROPEEN

(11) **EP 2 568 801 B1**
(45) Date de publication et mention de la délivrance du brevet: **13.07.2016**
(21) Numéro de dépôt: 11717643.8
(22) Date de dépôt: 04.05.2011
(51) Int. Cl.: A01K 1/01

(54) **DISPOSITIF DE RACLAGE À MOYENS DE GUIDAGE MÉDIANS ET LAMES DISPOSÉES DE PART ET D'AUTRE**
SCHABER MIT ZENTRALER FÜHRUNGSVORRICHTUNG UND KLINGEN AUF JEDER SEITE
SCRAPER DEVICE WITH CENTRAL GUIDE MEANS AND BLADES ON EACH SIDE

(30) Priorité: 05.05.2010 FR 1053506
(43) Date de publication de la demande: 20.03.2013
(73) Titulaire: Socobati, 22400 Lamballe (FR)
(72) Inventeur: LE GUILLOUX, Pierre, 22400 Lamballe (FR); POILBOUT, Dominique, 22400 Maroue (FR); HOMO, Sébastien, 22630 Saint Judoce (FR)
(74) Mandataire: Regimbeau
(86) Numéro de dépôt international: PCT/EP2011/057095
(87) Numéro de publication internationale: WO 2011/138352

(56) Documents cités:
- FR-A1- 2 738 457
- FR-A1- 2 839 418
- GB-A- 2 265 293

## Description

La présente invention est relative à un dispositif de raclage mobile du fond d'une fosse de collecte et de récupération de déjections animales.

Dans le domaine de l'élevage des animaux à l'intérieur de bâtiments, ce qui est une pratique courante pour l'élevage intensif de porcs, il est bien connu de loger ces porcs dans des cases, dans lesquelles les animaux se déplacent et vivent sur un plancher ajouré de type caillebotis, ce plancher surplombant une fosse pourvue d'un fond de collecte et de récupération de leurs déjections.

On sait depuis longtemps que l'urine, au contact des excréments des animaux, provoquent des réactions chimiques qui font apparaître notamment des composés nitrés qui sont malodorants et qui peuvent provoquer des pollutions environnementales.

On a donc cherché depuis quelques années à séparer le plus rapidement possible l'urine des excréments, dès que ceux-ci sont réceptionnés dans la fosse.

L'état de la technique en la matière peut être illustré notamment par le document FR-B-2 839 418 dans lequel est divulguée une installation d'élevage dans laquelle le fond de la fosse de récupération des déjections comporte des parois à profil transversal en pente, qui provoquent un écoulement gravitaire des liquides essentiellement, en direction d'au moins une fente d'écoulement calibrée.

Ils sont récupérés à une extrémité de l'installation, en vue d'être stockés, puis ultérieurement évacués et/ou traités.

On décrit également dans ce document un racleur qui est destiné à être déplacé de temps à autre contre le fond de la fosse, pour ramener l'ensemble des matières solides vers une extrémité de l'installation où elles sont collectées et valorisées.

Ce système de raclage comporte essentiellement un bâti constitué de deux guides longitudinaux entre lesquels sont articulées deux lames parallèles.

Ces lames sont par ailleurs reliées par une barre de traction commune qui autorise le déplacement de l'ensemble.

Avec ce dispositif antérieur on constate, du fait du guidage de l'ensemble par les guides placés en bout de lames, une zone non raclée très importante.

Par ailleurs, un tel dispositif est soumis à des efforts importants et n'est pas suffisamment rigide, de sorte qu'il a tendance à s'arcbouter.

De plus, en cas d'usure ou d'irrégularité au niveau de l'arête des lames, il n'existe pas de moyens permettant d'en régler la pression.

Enfin, c'est l'importance donnée à l'effort de traction qui assure exclusivement une pression sur les lames de raclage.

La présente invention vise donc à résoudre ces problèmes en proposant un dispositif de raclage du même type général que le précédent, mais qui est facile à guider et déplacer sur la surface à nettoyer, sans risque d'arc-boutement, avec une excellente pression des lames sur ladite surface.

Ces objectifs sont atteints conformément à la présente invention par un dispositif de raclage mobile du fond d'une fosse de collecte et de récupération de déjections animales, destiné à être déplacé selon une direction longitudinale sur ce fond pour racler les déjections qui y sont présentes, qui comprend un bâti pourvu d'au moins deux lames de raclage généralement transversale, de moyens de guidage généralement longitudinaux, ainsi que des moyens de traction en direction longitudinale.

Il est remarquable en ce que lesdits moyens de guidage comprennent un profilé longitudinal médian, de part et d'autre duquel s'étend au moins une desdites lames, et en ce que ce profilé présente une ouverture dirigée du même côté que l'arête desdites lames, de sorte qu'il est apte à s'emboîter sur une saillie longitudinale solidaire dudit fond et à coulisser le long de celle-ci.

Par le terme "médian", on entend que ledit profilé s'étend selon un axe longitudinal qui occupe le milieu de l'espace dudit dispositif. Préférentiellement, cet axe est un axe de symétrie.

Ainsi, du fait du guidage longitudinal par la partie médiane du système, on opère une traction uniforme et indépendante de la pression ou de l'effort que l'on est susceptible d'appliquer aux lames pour qu'elles appuient au mieux sur la surface à racler.

Selon d'autres caractéristiques avantageuses et non limitatives de ce dispositif :
- ledit profilé a une section transversale en forme de "U" inversé, dont les ailes sont préférentiellement divergentes ;
- les faces en regard des ailes du "U" sont pourvues d'un revêtement à faible coefficient de friction ;
- de part et d'autre des moyens de guidage s'étendent au moins deux lames disposées dans la continuité l'une de l'autre ;
- il comporte des moyens réglables d'appui sur chacune desdites lames ;
- lesdits moyens réglables sont portés par une poutre mobile commune, à une extrémité libre de laquelle sont fixés lesdits moyens de traction, cette poutre étant apte à occuper une première position dite "de raclage" dans laquelle lesdits moyens réglables prennent appui sur lesdites lames et une seconde position dite "de retour" dans laquelle ces moyens réglables ne prennent pas appui sur lesdites lames ;
- ladite extrémité libre de l'arbre s'étend au dessus desdits moyens de guidage ;
- chaque lame est solidaire d'une pièce de montage sur laquelle prennent appui lesdits moyens, et en ce que chacun de ces pièces est mobile en rotation autour d'un axe commun ;
- l'une des pièces de montage comporte un levier sur lequel prend appui ladite poutre lors de son passage de ladite position "de raclage" à la position "de retour", de sorte que ladite pièce pivote sur lui-même, relevant ainsi la lame associée, ainsi que les autres, via une butée de transmission de mouvement ;
- lesdites lames sont souples ;
- lesdites lames forment avec la surface à racler, un angle au plus égal à 30°.

D'autres caractéristiques et avantages de la présente invention apparaîtront à la lecture de la description détaillée qui va suivre de certains modes de réalisation préférentiels.

Cette description sera faite en référence aux dessins annexés dans lesquels :
Les figures 1, 2 et 3 sont respectivement des vues de face de dessus et en perspective d'un dispositif de raclage conforme à la présente invention, étant bien entendu que du fait de sa structure symétrique par rapport à un plan médian longitudinal, seuls les équipements de la partie "gauche" du dispositif de raclage sont représentés pour ne pas alourdir inutilement la vue correspondante.
Les figures 4 et 5 sont des vues similaires aux figures 1 et 2, le dispositif étant toutefois représenté en place sur le fond d'une fosse de collecte.
Les figures 6 et 7 sont des vues du dispositif de la figure 5 selon les plans de coupe VI - VI et VII - VII de celui-ci.
La figure 8 est une vue de détail en perspective des moyens de guidage de dispositif de raclage.
La figure 9 est une vue en perspective du bâti de ce dispositif en place sur le fond d'une fosse de collecte.
La figure 10 est une vue de côté et partielle du dispositif, montrant tout particulièrement le positionnement des lames de raclage.
Les figures 11 et 12 sont des vues en perspective, selon deux directions opposées, des lames et des moyens qui permettent d'y appliquer une pression.
Les figures 13 et 15 sont des demi vues de dessus du dispositif, dans une première position de raclage et une seconde position de retour.
Les figures 14 et 16 sont des vues en coupe des dispositifs des figures 13 et 15, selon les plans de coupe XIV - XIV et XVI - XVI repérés sur ces dernières.

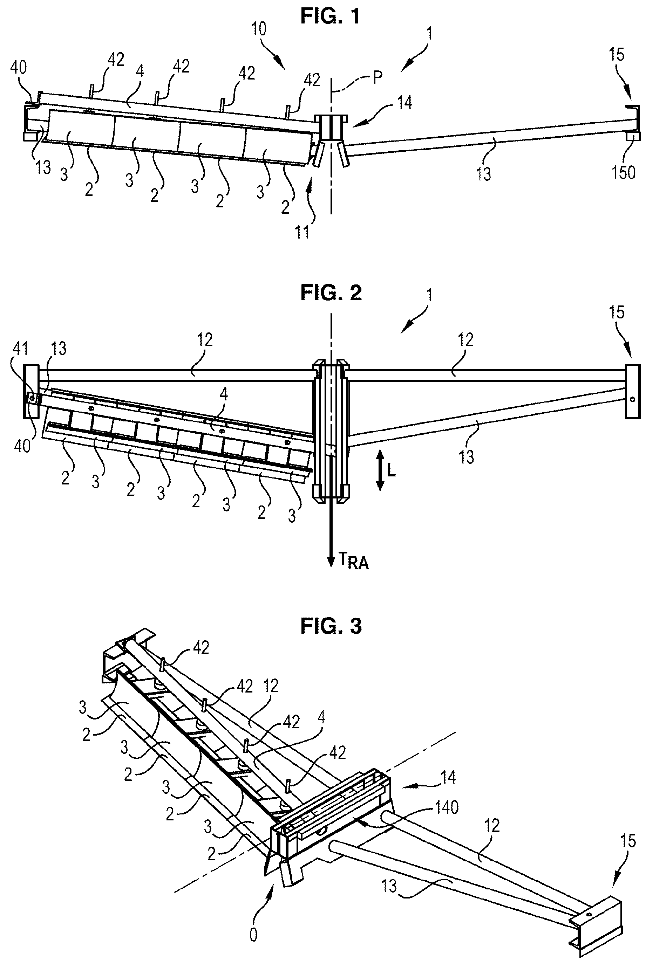

Le dispositif de raclage représenté sur les figures annexées et ainsi que cela est particulièrement visible aux figures 1 à 3 et 9 comporte essentiellement un bâti métallique, par exemple en acier inoxydable, formé de moyens de guidage comprenant un profilé longitudinal médian 11, auquel sont fixés des tubes rigidificateurs 12 et 13 dont l'extrémité distale (opposée au profilé 11) est fixée à un patin de guidage 15.

On entend par "longitudinal", la direction identifiée par la double flèche L de la figure 2 et l'axe X - X' des figures 1 et 3, qui correspond au mouvement de déplacement du dispositif de raclage.

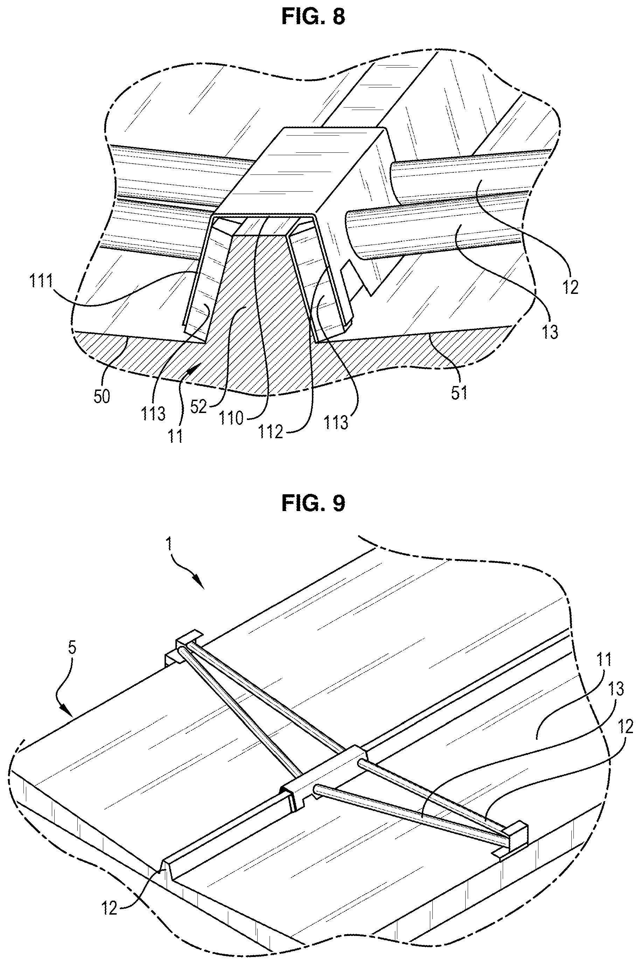

En particulier en référence aux figures 3 et 9, on note que les moyens de guidage 11 ont ici la forme d'un profilé longitudinal médian, qui a une section transversale en forme de "U" inversé, avec une base plane 110 et deux ailes divergentes 111 et 112. Entre celles-ci s'étend une ouverture O.

Comme cela apparaît de la figure 8 et ainsi qu'on l'expliquera plus loin en détail, les faces en regard des ailes 111 et 112 sont pourvues d'un revêtement antifriction 113, par exemple en PTFE (polytétrafluoroéthylène).

Ce profilé occupe une position longitudinale et médiane dans ce dispositif et on a repéré par la lettre P son plan de symétrie.

De part et d'autre des ailes 111 et 112 s'étendent les tubes rigidificateurs 12 et 13.

On qualifiera de tubes arrière les tubes 12 et de tubes avant les tubes 13, ceci en référence au déplacement normal du dispositif lorsqu'on l'utilise pour racler des déjections.

Il s'agit ici de tubes métalliques de section circulaire qui présentent une légère inclinaison par rapport à l'horizontale, de sorte que leur extrémité distale, c'est-à-dire opposée au profilé 11, est légèrement relevée.

Comme on l'expliquera plus loin, cette disposition est faite pour s'adapter à la pente que présente la surface de la fosse à racler.

Bien entendu, si la surface à racler est plane, les tubes occupent alors une position perpendiculaire au plan P.

Les extrémités distales de ces tubes 12 et 13 sont fixées à un patin 15 qui présente en coupe transversale la forme d'un U, dont les ailes parallèles s'étendent à l'horizontale.

Sous l'aile inférieure est prévue une plaquette antifriction, par exemple également en PTFE.

En examinant les figures 2 et 3, on constate que les tubes arrières sont dans l'alignement l'un de l'autre et s'étendent strictement à la perpendiculaire de l'axe X-X', tandis que les tubes avant 13 forment avec ce profilé 11 un angle aigu compris entre 75 et 80°.

Sur la face de fond du profilé 11 s'étend une structure longitudinale à clairevoie 14 qui sert de guide, ainsi qu'on l'expliquera plus loin, à une poutre 4.

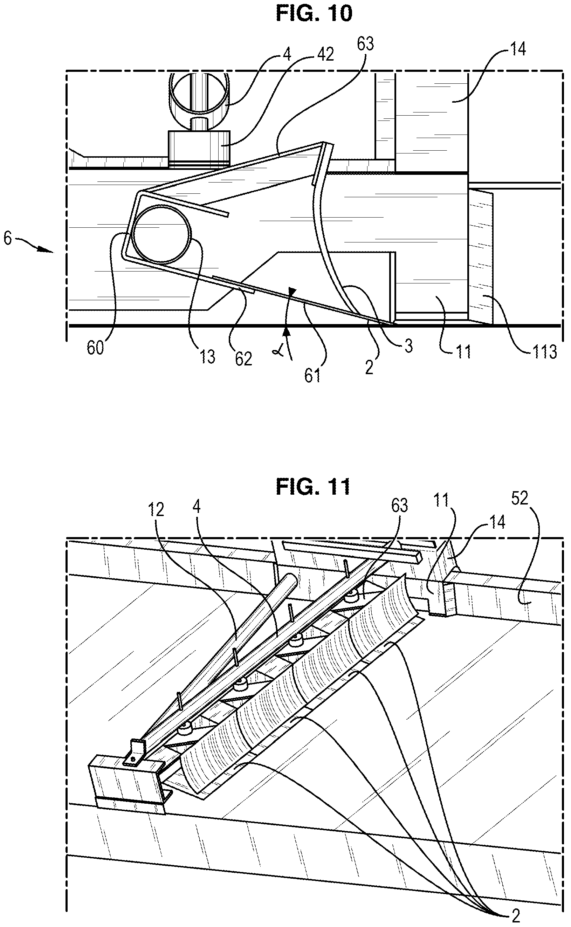

En se reportant cette fois-ci à la figure 10 ainsi qu'aux deux figures suivantes, on constate que sur le tube avant 13 est fixé un ensemble de pièces de montage 6 de lames 3.

Il s'agit de pièce de fixation à section en U avec une base 60 et deux ailes parallèles 61, l'une supérieure et l'autre inférieure.

Ces pièces de montage sont articulées autour de l'axe du tube 13.

L'aile supérieure 61 sert de moyen de fixation à une plaque de support ascendante 63 d'une bavette référencée 3.

L'aile inférieure, plus longue que la précédente porte, sur sa face interne, une lame 2.

Compte tenu de l'orientation de la pièce 6, la face inférieure de ces lames forme avec l'horizontale un angle aigu α de préférence inférieur à 30°.

Le positionnement du support 63 est tel que la bavette 3 se situe à l'aplomb de la face supérieure de la lame 3 associée, en retrait par rapport à son arête. Ses dimensions sont telles qu'elle s'appuie sur la lame, en adoptant un profil courbe.

Cette structure est répétée pour chacune des lames, de sorte que leur arête se situe dans la continuité l'une de l'autre, parallèlement à la direction générale du tube 13.

On note par ailleurs que l'aile supérieure des patins 15 porte une cornière 40 à section en "L" qui est articulée sur le patin correspondant autour d'un axe 41 généralement vertical. A la seconde aile de ce profilé est fixée une poutre commune 4 dont l'extrémité libre est logée à l'intérieur de la structure à clairevoie 14 qui surplombe le profilé 11.

Sur cette poutre sont prévues de petites tiges filetées 42 qui portent une pièce, par exemple en plastique à faible coefficient de friction (PTFE) apte à appliquer une pression sur les pièces de support de bavette 63 précitées.

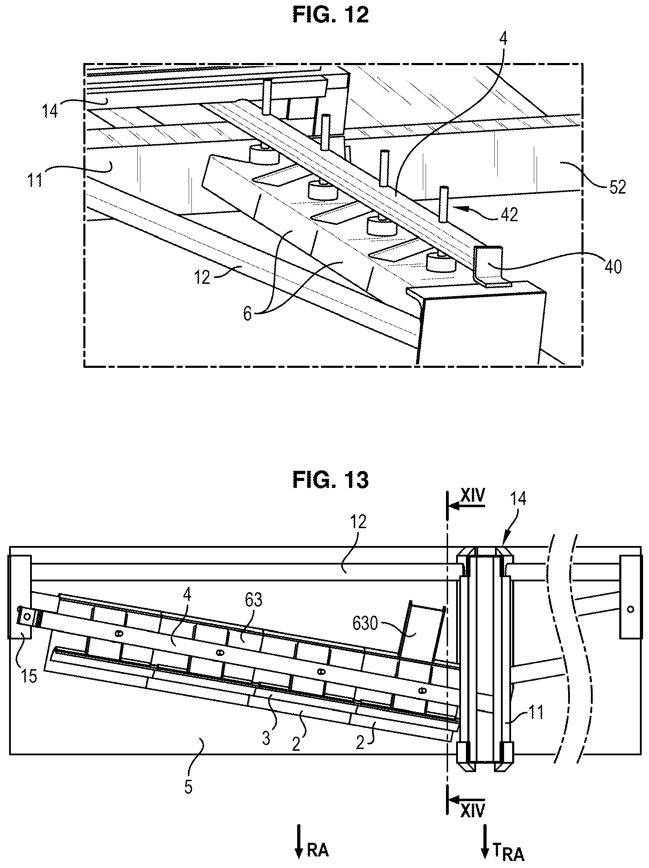

Enfin, et comme cela est particulièrement visible à la figure 13, on notera que l'une de ces pièces de support de bavette 63 porte un levier 630 relevé vers l'arrière qui, ainsi qu'on le décrira plus loin, permet de faire basculer l'ensemble des lames.

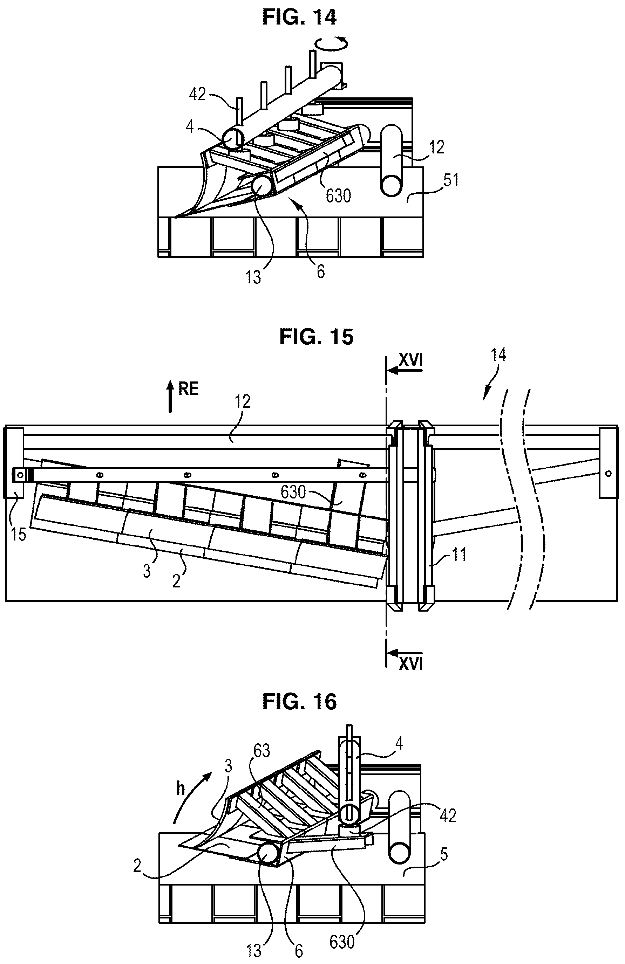

Sur les autres figures, à l'exception des figures 14 à 16, le levier 630 n'a pas été représenté, dans un souci de lisibilité des dessins.

Bien que cela ne soit pas visible en détail sur les schémas, les extrémités libres des deux poutres 4, reçues à l'intérieur de la structure à claire-voie, sont cinématiquement liées par une pièce qui autorise malgré tout leur débattement angulaire. Elle rattrape le jeu qui se crée entre les deux poutres et sert de moyen de fixation pour un câble de traction ou autre moyen analogue.

Nous allons maintenant décrire la manière dont le dispositif est utilisé pour procéder au raclage de déjections sur le fond d'une fosse.

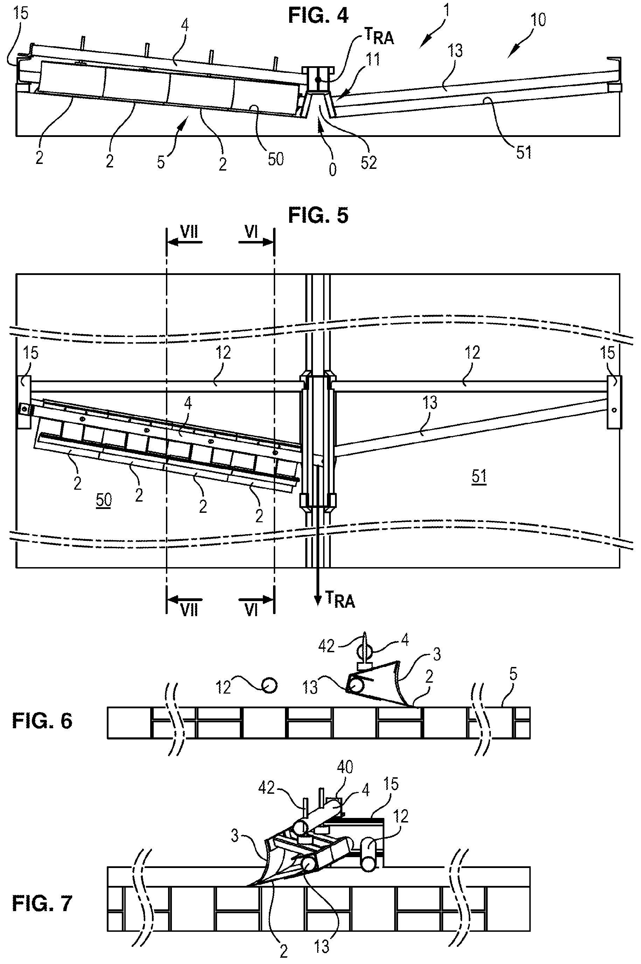

Nous prenons ici le cas particulier d'un fond de fosse (figure 4) qui est constitué d'éléments 5 qui présentent une double pente convergente délimitée par des surfaces pentues 50 et 51, en direction d'un élément formant saillie ou muret 52.

Ainsi que le montre toujours cette figure 4, le dispositif est disposé de manière à ce que le profilé 11 chevauche ou s'emboîte la saillie 52 précitée, du côté de son ouverture O. Ainsi, du seul fait de cet emboîtement, le dispositif de raclage est bien positionné.

Les plaquettes antifriction 150 qui équipent les patins d'extrémité 15 fournissent un bon appui latéral du dispositif sur les bords relevés du fond de fosse.

Bien que cela ne soit pas représenté, on procède au déplacement du système en réalisant une traction au niveau de l'extrémité libre de chacune des poutres 4 qui vient se loger dans la structure à clairevoie 14.

Ce faisant, les poutres pivotent autour de l'axe 41 et les éléments d'appui 42 viennent en butée contre les supports de bavette 63, tout en exerçant une pression efficace sur chacune des lames.

Ce qui est représenté aux figures 2 et 4 où le symbole T_{RA} signifie "traction de raclage".

Lorsque le dispositif de raclage a été déplacé d'un bout à l'autre de l'installation, il est alors nécessaire de lui faire subir le chemin inverse. Afin de ne pas user prématurément les lames, il est utile que celles-ci ne s'appliquent pas sur le fond de fosse.

Ce déplacement est réalisé en opérant une traction dans le sens inverse de celui décrit plus haut. Ce faisant et du fait que la poutre 4 est articulée simplement autour de l'axe 41, il s'opère un pivotement de celle-ci autour dudit axe de sorte que son extrémité libre se déplace au-dessus du boîtier 14 (voir figure 15). Ce faisant, l'une des pièces 42 qui équipent la poutre 4, vient interférer avec le levier 630 qui équipe une des lames et qui provoque alors son pivotement, comme le montre la flèche h de la figure 16.

Ce faisant, toutes les autres lames se relèvent, via une butée de transmission de mouvement, non représentée, qui équipe chacune d'entre elles.

On notera que le dispositif est particulièrement performant lorsqu'on utilise des lames présentant une certaine souplesse. En effet, dans l'hypothèse où la matière à racler est compacte, on observe une légère déformation de la lame.

On notera par ailleurs que plus la lame est inclinée par rapport à la verticale, plus l'efficacité du raclage est grande.

Les matières raclées s'accumulent sur la face supérieure des lames où elles sont stoppées par la bavette 3 qui les empêchent de remonter.

Dans l'hypothèse où le fond de la fosse présente, dans le sens longitudinal, une pente descendante en vue de la collecte de l'urine en un point bas, il est logique de déplacer le dispositif de raclage dans le même sens que cette pente.

Toutefois, cela oblige à pourvoir l'installation de moyens qui vont éviter que des matières solides, raclées et ramenées à une extrémité de l'installation, ne rejoignent l'urine.

Avec le dispositif de raclage selon l'invention, et plus généralement avec tout dispositif de raclage mobile présentant une ou plusieurs lames, il est possible de procéder à un raclage efficace en déplaçant le dispositif dans le sens inverse de la pente longitudinale d'écoulement des urines, pourvu qu'il existe, dans la structure de ce dispositif de raclage, des ouvertures ou chemins privilégiés d'écoulement des liquides.

Ainsi, dans un mode de réalisation particulier, on prévoit que les arêtes des lames ne soient pas exactement dans la continuité les unes des autres, mais légèrement décalées dans le sens longitudinal, de manière à créer des passages libres

Grâce à cette méthode de déplacement, on collecte, en des endroits à l'opposé l'un de l'autre, les matières sèches et les matières liquides. Leur stockage et leur collecte peut se faire alors dans les meilleures conditions.

On a indiqué plus haut que les tubes avant 13 forment avec le profilé 11 un angle aigu compris entre 75 et 80°. Cela confère à l'ensemble des lames une disposition analogue à celle des lames d'un chasse-neige.

Cette disposition particulière apporte deux avantages particulièrement appréciables.

Le premier réside dans le fait qu'au fur et à mesure du déplacement du dispositif de raclage sur le fond de la fosse, on constate que la matière raclée se déplace transversalement vers ses côtés opposés, c'est à dire dans une direction exactement inverse à celle de l'écoulement de l'urine, ce qui contribue à une meilleure séparation des phases liquide et solide.

Comme indiqué plus haut, le fond de fosse est préférentiellement constitué d'éléments 5 juxtaposés, le mince espace qui les sépare étant étanchéifié par un joint.

Le second avantage de ladite disposition réside dans le fait que lors du déplacement des lames dans la région de passage d'un élément 5 à l'élément voisin, les lames sont disposées en biais par rapport à l'espace précité, sans risque de blocage.

## Revendications

1. Dispositif (1) de raclage mobile du fond d'une fosse de collecte et de récupération de déjections animales, destiné à être déplacé selon une direction longitudinale (L) sur ce fond (5) pour racler les déjections qui y sont présentes, qui comprend un bâti (10) pourvu d'au moins deux lames (2) de raclage généralement transversale, de moyens de guidage (11) généralement longitudinaux, ainsi que des moyens de traction (T_{RA}) en direction longitudinale, **caractérisé par le fait que** lesdits moyens de guidage comprennent un profilé longitudinal médian (11), de part et d'autre duquel s'étend au moins une desdites lames (2), et en ce que ce profilé (11) présente une ouverture (O) dirigée du même côté que l'arête desdites lames (2), de sorte qu'il est apte à s'emboîter sur une saillie longitudinale (52) solidaire dudit fond (5) et à coulisser le long de celle-ci.

2. Dispositif selon la revendication 1, **caractérisé par le fait que** ledit profilé (11) a une section transversale en forme de "U" inversé, dont les ailes (111, 112) sont préférentiellement divergentes.

3. Dispositif selon la revendication 2, **caractérisé par le fait que** les faces en regard des ailes (111, 112) du "U" sont pourvues d'un revêtement (113) à faible coefficient de friction.

4. Dispositif selon l'une des revendications précédentes, **caractérisé par le fait que** de part et d'autre des moyens de guidage (11) s'étendent au moins deux lames (2) disposées dans la continuité l'une de l'autre.

5. Dispositif selon la revendication 4, **caractérisé par le fait qu'**il comporte des moyens réglables (4, 42) d'appui sur chacune desdites lames.

6. Dispositif selon la revendication 4, **caractérisé par le fait que** lesdits moyens réglables sont portés par une poutre (4) mobile commune, à une extrémité libre de laquelle sont fixés lesdits moyens de traction (TRA), cette poutre (4) étant apte à occuper une première position dite "de raclage" dans laquelle lesdits moyens réglables (42) prennent appui sur lesdites lames (2) et une seconde position dite "de retour" dans laquelle ces moyens réglables (42) ne prennent pas appui sur lesdites lames (2).

7. Dispositif selon la revendication 6, **caractérisé par le fait que** ladite extrémité libre de la poutre (4) s'étend au dessus desdits moyens de guidage (11).

8. Dispositif l'une des revendications 6 ou 7, **caractérisé par le fait que** chaque lame est solidaire d'une pièce de montage (6) sur laquelle prennent appui lesdits moyens (42), et en ce que chacune de ces pièces est mobile en rotation autour d'un axe commun (13).

9. Dispositif selon la revendication 8, **caractérisé par le fait que** l'une des pièces de montage (6) comporte un levier (630) sur lequel prend appui ladite poutre (4) lors de son passage de ladite position "de raclage" à la position "de retour", de sorte que ladite pièce (6) pivote sur lui-même, relevant ainsi la lame associée (2), ainsi que les autres, via une butée de transmission de mouvement.

10. Dispositif l'une des revendications précédentes, **caractérisé par le fait que** lesdites lames (2) sont souples.

11. Dispositif l'une des revendications précédentes, **caractérisé par le fait que** lesdites lames (2) forment avec la surface à racler, un angle au plus égal à 30°.

## Patentansprüche

1. Mobile Vorrichtung (1) zum Schaben des Bodens einer Grube zum Sammeln und Rückgewinnen tierischer Exkremente, die bestimmt ist, gemäß einer Längsrichtung (L) über diesen Boden (5) geführt zu werden, um die dort vorhandenen Exkremente zu schaben, die ein Gestell (10), das mit mindestens zwei allgemein transversalen Schabeklingen (2) ausgestattet ist, allgemein längliche Führungsmittel (11) sowie Zugmittel (T_{RA}) in länglicher Richtung umfasst, **dadurch gekennzeichnet, dass** die Führungsmittel ein mittleres Längsprofil (11) umfassen, von dem auf der einen und der anderen Seite mindestens eine der Klingen (2) abgeht, und dass dieses Profil (11) eine Öffnung (0) aufweist, die zur selben Seite wie die Kante der Klingen (2) zeigt, so dass es imstande ist, auf einem länglichen Vorsprung (52) zu rasten, der mit dem Boden (5) fest verbunden ist und auf diesem entlang zu gleiten.

2. Vorrichtung nach Anspruch 1, **dadurch gekennzeichnet, dass** das Profil (11) einen Querschnitt in Form eines umgekehrten "U" hat, dessen Flügel (111, 112) vorzugsweise divergieren.

3. Vorrichtung nach Anspruch 2, **dadurch gekennzeichnet, dass** die Flächen gegenüber den Flügeln (111, 112) des "U" mit einer Beschichtung (113) mit geringem Reibungskoeffizienten ausgestattet sind.

4. Vorrichtung nach einem der vorangehenden Ansprüche, **dadurch gekennzeichnet, dass** sich beidseits der Führungsmittel (11) mindestens zwei Klingen (2) erstrecken, die in Kontinuität zueinander angeordnet sind.

5. Vorrichtung nach Anspruch 4, **dadurch gekennzeichnet, dass** sie auf jeder der Klingen einstellbare Auflagemittel (4, 42) aufweist.

6. Vorrichtung nach Anspruch 4, **dadurch gekennzeichnet, dass** die einstellbaren Mittel von einem gemeinsamen beweglichen Balken (4) getragen werden, wobei die Zugmittel (T_{RA}) an einem freien Ende desselben befestigt sind, wobei dieser Balken (4) imstande ist, eine sogenannte erste "Schabe"-Position, in welcher sich die einstellbaren Mittel (42) auf den Klingen (2) abstützen, und eine zweite sogenannte "Rückkehr"-Position, in welcher sich diese einstellbaren Mittel (42) nicht auf den Klingen (2) abstützen, einzunehmen.

7. Vorrichtung nach Anspruch 6, **dadurch gekennzeichnet, dass** sich das freie Ende des Balkens (4) über den Führungsmitteln (11) erstreckt.

8. Vorrichtung nach einem der Ansprüche 6 oder 7, **dadurch gekennzeichnet, dass** jede Klinge mit einem Montageteil (6) fest verbunden ist, auf dem sich die Mittel (42) abstützen, und dass jedes dieser Teile um eine gemeinsame Achse (13) rotierend bewegbar ist.

9. Vorrichtung nach Anspruch 8, **dadurch gekennzeichnet, dass** eines der Montageteile (6) einen Hebel (630) aufweist, auf dem sich der Balken (4) bei seinem Übergang von der sogenannten "Schabe"-Position in die "Rückkehr"-Position abstützt, so dass das Teil (6) um sich selbst schwenkt, wobei dadurch die zugeordnete Klinge (2) sowie die anderen über einem Bewegungsübertragungsanschlag angehoben werden.

10. Vorrichtung nach einem der vorangehenden Ansprüche, **dadurch gekennzeichnet, dass** die Klingen (2) elastisch sind.

11. Vorrichtung nach einem der vorangehenden Ansprüche, **dadurch gekennzeichnet, dass** die Klingen (2) mit der zu schabenden Oberfläche einen Winkeln von höchstens gleich 30° bilden.

## Claims

1. A mobile scraper device (1) for scraping the bottom of a pit in which animal excrement is collected and recovered, intended to be moved in a longitudinal direction (L) over this bottom (5) to scrape the excrement thereupon, device which comprises a supporting structure (10) provided with at least two generally transverse scraper blades (2), generally longitudinal guide means (11) and traction means (T_{RA}) in the longitudinal direction, **characterized by** the fact that the said guide means comprise a median longitudinal section piece (11) either side of which there extends at least one of the said blades (2), and in that this section piece (11) has an opening (O) directed towards the same side as the edge of the said blades (2), so that it is capable of interlocking onto and sliding along a longitudinal protrusion (52) integral with the said bottom (5).

2. The device according to claim 1, **characterized by** the fact that the said section (11) has an inverted U-shaped cross-section, whose branches (111, 112) preferably diverge.

3. The device according to claim 2, **characterized by** the fact that the opposite-facing surfaces of the branches (111, 112) of the « U » are provided with a coating (113) having a low coefficient of friction.

4. The device according to one of the preceding claims, **characterized by** the fact that on either side of the guide means (11) there extend at least two blades (2) arranged in the continuity of each other.

5. The device according to claim 4, **characterized by** the fact that it comprises adjustable bearing means (4, 42) upon each of the said blades.

6. The device according to claim 4, **characterized by** the fact that the said adjustable means are carried by a common mobile beam (4) at one free end of which the said traction means (T_{RA}) are secured, this beam (4) being capable of taking up a first so-called « scraping » position in which the said adjustable means (42) bear upon the said blades (2), and a second so-called « return » position in which these adjustable means (42) do not bear upon the said blades (2).

7. The device according to claim 6, **characterized by** the fact that the said free end of the beam (4) extends above the said guide means (11).

8. The device according to one of claims 6 or 7, **characterized by** the fact that each blade is secured to an assembly part (6) on which the said means (42) bear upon and in that each of these parts is mobile in rotation about a common axle (13).

9. The device according to claim 8, **characterized by** the fact that one of the assembly parts (6) comprises a lever (630) upon which the said beam (4) bears when changing from the said « scraping » position to the « return » position, so that the said part (6) pivots on itself thereby lifting the associated blade (2), and the others, via a movement transmitting abutment.

10. The device according to any of the preceding claim, **characterized by** the fact that the said blades (2) are flexible.

11. The device according to one of the preceding claims, **characterized by** the fact that the said blades (2), together with the surface to be scraped, form an angle of no more than 30°.
